# EUROPEAN PATENT SPECIFICATION

(11) **EP 0 638 050 B1**
(45) Date of publication and mention of the grant of the patent: **27.11.1996**
(21) Application number: 90904587.4
(22) Date of filing: 05.03.1990
(51) Int. Cl.: C02F 9/00, B01D 39/06, B01D 39/04, B01D 27/02

(54) **IMPROVEMENTS IN FILTRATION**
VERBESSERUNGEN BEZÜGLICH FILTRIERUNG
FILTRAGE AMELIORE

(30) Priority: 03.03.1989 AU 3040/89
(43) Date of publication of application: 15.02.1995
(73) Proprietor: BOYD KEOGH INDUSTRIES PTY. LIMITED, Manly NSW 2095 (AU)
(72) Inventor: KEOGH, Boyd, T., Manly, NSW 2095 (AU)
(74) Representative: Day, Jeremy John
(86) International application number: AU9000091
(87) International publication number: WO9009836

(56) References cited:
- EP-A- 0 236 071
- GB-A- 1 072 227
- US-A- 370 651
- US-A- 384 190
- US-A- 1 960 975
- US-A- 3 375 933
- PATENT ABSTRACTS OF JAPAN vol. 11, no. 394 (C-465)23 December 1987 & JP-A-62 155 914 ( NUMATA OSAMU ) 10 July 1987
- PATENT ABSTRACTS OF JAPAN vol. 13, no. 79 (C-571)22 February 1989 & JP-A-63 269 938 ( UNITIKA ) 8 November 1988

## Description

The present invention relates to filtration cartridges and more particularly relates to cartridges for use in removing contaminants and impurities from effluents.

The vexing problem of removal and disposal of contaminants and impurities from industrial wastes has existed for some time. Many attempts have been made to filter liquid industrial wastes so that the filtered liquid may be of a quality suitable for discharge into the sewer mains or as acceptable secondary effluent into water courses. According to another method of waste disposal, unfiltered noxious wastes are often dumped in certified waste disposal dumps however, very little is known about the possible deleterious effects on the water cycle that dumping liquid wastes in this way may cause irrespective of the coefficient of permeability of the soil in which the wastes are deposited. The same lack of knowledge on full environmental effects exists in relation to contaminated liquids discharged into water courses and oceans. This has forced the relevant authorities to review existing standards so that effluent qualities must be improved.

Many industries have, in the past, used filtration plants and other types of process plants, (e.g. Dissolved Air Floatation, Coalescent inclined Plate Pak, Chemical Dosing, etc.), to treat effluents however, the results of treatment vary considerably according to the type of plants used and the nature of the contaminant impurity to be removed from a particular effluent.

This has led to development of many different types of adsorbant filter cartridges for use in filtration plants. The cartridges differ in configuration and in the material which is used to effect the filtration. They are generally disposable and have varying life spans which are related to the nature of the material which is to be filtered. The life of the filter is related to the surface area used to remove particulates, slimes, oil, etc. and in the case of contaminants to be removed from solution, to the adsorption characteristics of the filter material and to the total adsorptive surface area made available by the filter material.

Among the prior art cartridges are those which have pleated synthetic material which is intended to present a large surface area to the liquid being filtered for the removal of particulates. The larger the surface area the greater the potential life of a filter. These filters have been used with some success, however, their life is reduced due to clogging of the filter membranes.

One material which has previously been employed in absorbent filter cartridges is activated carbon. Such carbon is an efficacious material for filtration of particularly noxious trade wastes which require strict disposal controls because it has quite good adsorptive capability.

The aim of the use of the cartridges is to achieve a level of purity in a filtered liquid such that it may be recirculated in the process for reuse or discharged into the sewerage system or into a watercourse or ocean outfall.

One problem which exists is in the disposal of the used cartridges as these still contain the noxious substances which are filtered from effluents. It is therefore desirable to increase cartridge life so that the cartridge disposal occurs less often resulting in obvious practical and economic advantages. This can be done by the production of a more efficient cartridge and it is this aspect of filtration to which the present invention is primarily directed.

It is therefore an object of the present invention to provide a filter cartridge having filtration materials therein which through their physical properties enable more efficient and more complete filtration of contaminent and impurities than has been possible in the prior art filters.

It is a further object of the invention to provide a filter material blend which improves filtration without compromise to the adsorption capabilities and permeability of the filter blend. In fact, the present invention markedly improves the adsorption of contaminants due to the special filter blend materials used. Furthermore, the larger available adsorptive surface area of the filter material is achieved with the blend and within a given volume of the cartridge in comparison to the prior art cartridges.

As adsorptive filter cartridges have extensive use in industry (for instance it is estimated that more than six million cartridges are used per year in the U.S.A. in the dry cleaning industry alone), and as cartridges are employed in up to 70% of dry cleaning machines in the U.S.A., the benefits to industry and to the environment of effecting improvements in the efficiency of and prolonging the life of cartridges are obvious.

According to the commonly used prior art cartridges, carbonaceous filter materials (usually Granular Activated Carbon) are used whereby the pollutants to be removed from solution are adsorbed onto the exposed surface area of the carbon which facilitates absorption of the contaminants.

Ideally, a filter cartridge should contain a filter material blend which maximises the available adsorptive surface area has good adsorption properties and has a permeability which allows the passage of the fluid through the filter at a velocity of the fluid falling within a range commensurate with the type of material which is to be filtered from the solution.

It has been found from experience and experiment that there is a marked improvement in the filtration properties of a filter if a particular blend of particulate adsorptive material is used in a filter cartridge. Surprising filtration results have been found when a blend of the materials ACTIVAID P42 Powder, ACTIVAID F12 fibre and ACTIVAID F52 fibre are used. ACTIVAID P42 is a trademark name for what is essentially a carbonaceous adsorptive powder, similarly ACTIVAID F12 and F52 fibre is a trademark name for fibrous absorbents. Other materials which may be used include traditional powdered activated carbon as a substitute for ACTIVAID P42, and gravel for increasing the permeability of the mix.

Typical proportions of a blend of the aforesaid constituents are 20% P42 powder, 40% F12 fibre and 40% F52 fibre. This example proportionally is not to be construed as a limiting mix of the blend. A possible range of proportions for each constituent would be P42 powder 5 to 35%, F12 20 to 60%, F52 20% to 60%.

It will be appreciated that the combination of the above and other analogous constituents are potentially infinite.

Where the blend is used for treating gases, F52 fibre only may be the only constituent used to ensure adequate permeability and minimum pressure drop in the feeding line. Gravel may also be included with such a fibre to further increase permeability.

According to the present invention there is provided a system for the treatment and retreatment of contaminated fluid waste comprising:
a source of contaminated waste linked to a circulation network of pipes,
means in the network for urging the contaminated fluid waste from the source through the network,
characterised in that the network comprises at least one receptacle containing a filter blend comprising 5% to 35% carbonaceous powder, 20% to 60% of a first adsorptive fibre material and 20% to 60% of a second adsorptive fibre material, the blend having a greater amount of the first fibre material and second fibre material combined compared to the amount of the carbonaceous powder to form a cartridge which is permeable to the fluid.

In another aspect the invention provides a filter blend for use in treatment of contaminated fluid waste comprising 5% to 35% carbonaceous powder, 20% to 60% of a first adsorptive fibre material and 20% to 60% of a second adsorptive fibre material, the blend having a greater amount of the first fibre material and second fibre material combined compared to the amount of the carbonaceous powder.

The invention also provides the filter blend contained in a housing.

In the preferred embodiment filtration of the waste occurs by but not limited to adsorption adherence of the waste onto the surface area of particulate blend materials, and by intermolecular attraction between the waste material and the surfaces of the particulate constituents of the blend.

The invention will now be described in more detail according to a preferred but non-limiting embodiment of the invention wherein;
- Figure 1: shows the configuration of a cartridge according to one embodiment of the apparatus aspect of invention.
- Figure 2: shows an elevational view of the cartridge of figure 1.
- Figure 3 sh: ows a configurational layout of one example of a treatment system according to a preferred embodiment of the systems aspect of the invention.
- Figure 4: shows a configurational layout of a second example of a treatment system according to a preferred embodiment of the systems aspect of the invention.
- Figure 5: shows a configurational layout of a third example of a treatment system according to a preferred embodiment of the systems aspect of the invention.
- Figure 6: shows a configurational layout of a fourth example of a treatment system according to a preferred embodiment of the systems aspect of the invention.

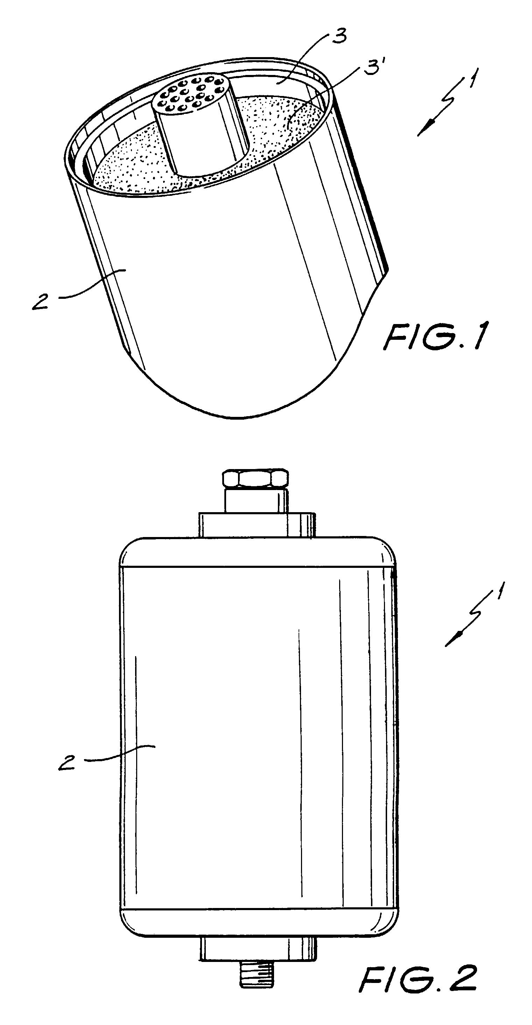

Referring to figure 1 there is shown a cartridge 1 which comprises a housing 2. The housing has disposed therewithin a receptacle 3 which is adapted to hold filter blend 3'. The configuration of the cartridge which is illustrated is by no means to be construed as limiting to the types of cartridge designs which may be used. The critical part of the cartridge lies in the blend of constituents which form the blend 3' and the bed depth and as such the shape and configuration of the cartridge is variable to suit requirements.

According to prior art filter methodology, traditional activated carbon is available as powdered activated carbon (PAC), granular activated carbon (GAC) and extruded activated carbon (EAC). The difficulty with such traditional activated carbons used in filter cartridges especially in the form of PAC, is that it would form an impermeable barrier if used in the manner of the present invention. If GAC is used in such manner as a compromise to ameliorate the barrier effect, the amount of available adsorptive surface area is reduced. If a combination of GAC and PAC is used, the PAC particles will migrate to the downstream face and eventually form an impermeable barrier. Once the impermeable barrier is formed the process of filtration halts.

In contrast, where a blend of the aforesaid ACTIVAID materials are blended for use in cartridge filtration of contaminated solutions surprising results are achieved. Firstly, the barrier effect does not occur as there is no migration of fine particles. Secondly, there is a significant increase in the adsorptive surface area available to the material to be filtered due to the fineness of the particles. Thirdly, a satisfactory permeability is maintained in the blend 3' due to the physical properties of the spiky skeletal fibres.

Any migration of the fine particles is prevented by appropriate selection of constituent particles within the blend.

The preservation of permeability of the blend is critical to the maintenance of appropriate velocities of the material to be filtered. It has been found through trial and error experimentation that particular threshold velocities are appropriate for the effective filtration of particular substances. This is largely due to the varying adsorption rates of the contaminants. The variable velocities are facilitated by the design permeability of the core of the filter and the rate at which the liquid is pumped through the cartridge.

Experiment has shown that the best filtration results are achieved when the velocity of the liquid through the core is within the range of 0.01cm/sec to 1.0cm/sec . The more contaminated the liquid the slower the velocity of the liquid through the core. For instance, water containing a dye is passed through the core at a much higher velocity than liquids contaminated with oils degreasers, petroleum products for instance as less time is required for adsorption of the dye particles.

The range of liquids and contaminants which can be treated with the unique blend of ACTIVAID adsorbents in the cartridge configuration, is large. Most industrial liquid trade wastes, may be filtered together with process water (both fresh and seawater) in aquaculture projects, and potable water.

In an alternative embodiment of the invention (not shown) a cartridge may be fabricated having a filtration element comprising a blend as described above sandwiched between two permeable membranes. To obtain a large surface area the sandwich membrane may be disposed in a zig zag configuration within the filter. Alternatively, the filtration element may comprise a series of modular panels formed of the blend sandwiched between filaments.

Such filter elements can be in the form of elements which are replaced by new ones at the end of their useful life, or alternatively, they can be in the form of fixed filaments from within which the spent media blend is removed and recharged with new media blend.

What follows below are tables of test results which indicate the effect of filtration of contaminated waste water via the ACTIVAID blend contained within a cartridge. The first table shows a quantitative comparison between an untreated and treated sample of dye house waste water containing BLUE PIGMENT DYE, PEROXIDE AND POLYVINYL acetate.

**TABLE 1**

| Sample Condition | % Light Transmittance at wave length 470 Nm in 1cm cuvette | Total chemical Oxygen demand C.O.D. Mg/L | Total Suspended Solids mg/L |
|---|---|---|---|
| UNTREATED | 0% | 2,440 | 7,590 |
| Treated in ACTIVAID Cartridge | 98% | 35 | 31 |

The second table shows a quantitative comparison between an untreated and treated sample of waste water from a vehicle service station.

**TABLE 2**

| Sample Condition | % Light Transmittance at wave length 470 Nm in 1cm cuvette | Total chemical Oxygen demand C.O.D. Mg/L | Total Suspended Solids mg/L |
|---|---|---|---|
| UNTREATED | 0% | 3,621 | 854 |
| Treated in ACTIVAID Cartridge | 97% | 76 | 21 |

As can be seen from the above tables, the effects of filtration using the ACTIVAID blend are quite dramatic. Highly contaminated solutions with no light transmittance are able to be filtered to provide almost complete removal of suspended solids. Other pollutants and chemical oxygen demand are also reduced.

Visual inspection of filtered samples indicates that the liquid filtered is clear, allowing almost 100% light transmittance and in some cases the result is a clearer liquid than potable water.

It will be seen from the aforesaid description of the present invention and its various embodiments that the invention is arrived at by consideration of various parameters involved in filtration including velocity of liquid, nature of contaminant to be filtered, extent of available adsorptive surface area, permeability of the filtration blend, composition of filtration blend all of which must be taken into account when arriving at the final mix of the blend.

Practical tests were carried out for the treatment of contaminated waste using the blend according to the apparatus aspect of the present invention.

### EXAMPLE 1

This example relates to a project where waste waters resulting from the preparation and painting of fighter aircraft had been accumulated in a large concrete basin.

The principal contaminants in the effluent were phenol, methylethylketone, (MEK), and methylene chlorides. 175,000 litres of the contaminated water were treated through the system, and after treatment, discharged to a biological sewage treatment plant on the Base.

It will be seen by reference to the laboratory analyses enclosed, (which were done on samples taken at the start of the operation, and after 100,000 litres had been treated), that the phenol had been reduced from 31 mg per litre to less than 0.05 mg per litre.

The MEK was reduced from 30 mg per litre to less than 0.25 mg per litre, and the methylene chloride from 0.31 mg per litre to less than 0.05 mg per litre.

These pollutants are recognised as being difficult to remove by prior art processes, and the removal efficiencies obtained using the treatment process of the present invention were quite remarkable.

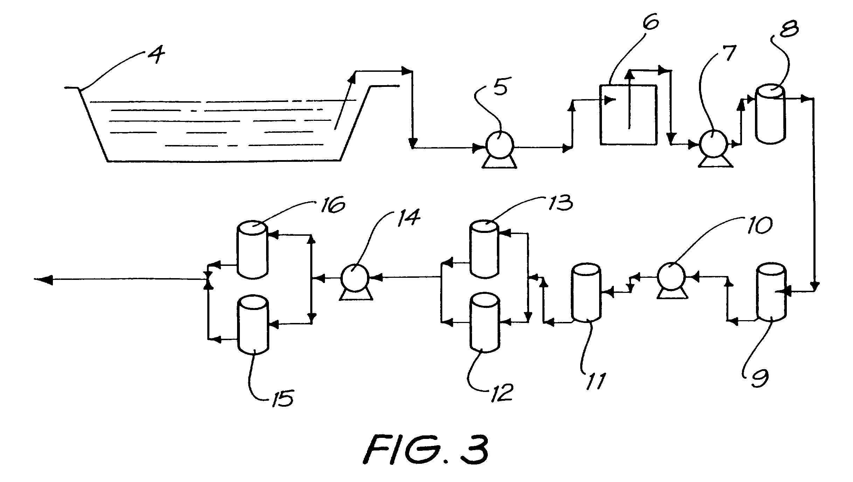

Referring to figure 3, item 4, is the concrete basin containing the contaminated water; item 5 is a pump; item 6 is a 1,000 litre transfer tank; item 7 is a pump; item 8 is a filter module containing a ceramic absorbent media; item 9 is a filter module in which the septum is coated with a known High Carbon Filter Powder,.

Item 10 is another pump, whilst item 11 is another filter module containing a specially coated pleated textile membrane; items 12 and 13 are two filter modules operating in parallel, each of which is fitted with two cartridges containing the blend of materials in accordance with this invention.

Item 14 is another pump; items 15 and 16 are two filter modules operating in parallel, each of which is fitted with two cartridges containing the blend of materials in accordance with this invention.

Set out below are tabulated results of tests on treated samples. Samples were received at the laboratory and analysed as directed with the following results:-

| Sample Description | Total Phenolic Compounds mg/L | Methylene Chloride mg/L | Methyl Ethyl Ketone mg/L |
|---|---|---|---|
| Raw | 31 | 0.31 | 30 |
| Treated after 500 litres | Less than 0.05 | Less than 0.05 | Less than 0.25 |
| Treated after 100,000 litres | Less than 0.05 | 0.08 | Less than 0.25 |

### EXAMPLE 2

This example relates to a trial recently carried out at a radiator repair shop from which the trade waste effluent was known to contain lead contamination greatly in excess of the acceptance standards for discharge to sewer.

A trade waste system was set up at the radiator repair factory in accordance with the enclosed process flow sheet; waste water was pumped from an existing concrete tank, treated through the process plant, and delivered to the treated water tank.

The analyses of the effluent before treatment, and the treated water sample after treatment indicate that the very high lead content was reduced from 110 mg per litre to less than 0.1 mg per litre; the zinc contamination from 52 mg per litre to 0.02 mg per litre, and the chromium contamination from 0.36 mg per litre to less than 0.06 mg per litre.

Substantial reductions were also achieved in total dissolved solids and total suspended solids.

The quality of the treated water conformed with the acceptance standards for discharge to sewer and was of acceptable quality for recirculation in the radiator repair process thus resulting in substantial savings to the owner of the factory.

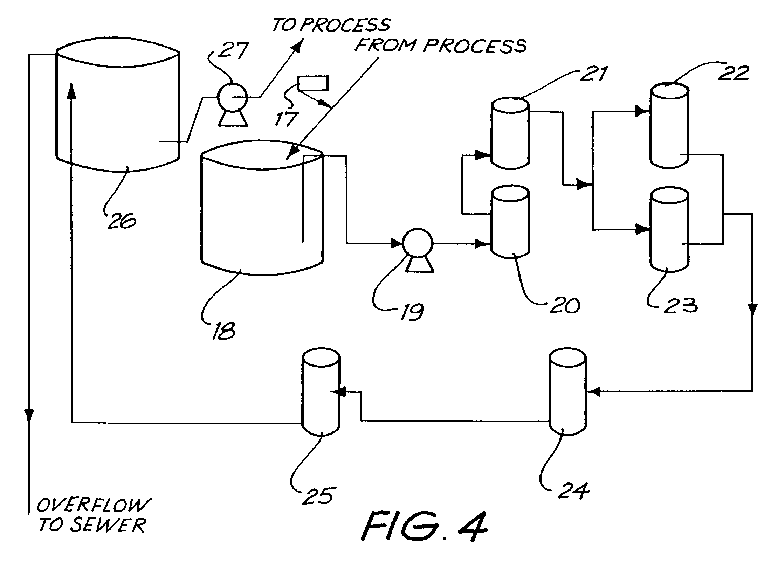

Referring to figure 4; item 17 is a small drip feeder for delivering a small concentration of flocculant to the incoming effluent stream.

Item 18 is an existing concrete settling tank; item 19 is a pump; items 20 and 21 are filter modules operating in series each of which contain ceramic absorbent media for the removal of suspended oil.

Items 22 and 23 are filter modules operating in parallel, each of which contain specially coated pleated textile cartridges.

Items 24 and 25 are filter modules operating in series, each of which is fitted with a single cartridge containing the blend of materials in accordance with this invention.

Item 26 is an existing concrete treated water tank, and item 27 is an existing pump.

Set out below is a table of results of tests carried out on treated samples.

| | Acceptance Standard for discharge to sewer | Raw Water Feed to Plant | Clean Treated Water |
|---|---|---|---|
| Total Dissolved Solids 180°C mg/L | | 3740 | 190 |
| Total Suspended Solids | | 80 | 10 |
| Total Chromium - Cr mg/L | 10 mg/L | 0.36 | 0.06 |
| Total Leads - Pb mg/L | 10 mg/L | 110 | 0.1 |
| Total Zinc - Zn mg/L | 5 mg/L | 52 | 0.02 |
| | | | |

### EXAMPLE 3

This example relates to a project in which waste water effluent from a leather tannery was treated to remove such pollutants as suspended solids, chromium, sulphides, oil and grease, biochemical oxygen demand, (B.O.D.), and chemical oxygen demand, (C.O.D.).

Substantial reductions were obtained for each of the above pollutants, and as a result the treated water was of a suitable quality to meet the acceptance standards for discharge to sewer.

In this case the water was considered to be of acceptable quality for recirculation within the tannery works, resulting in substantial financial savings for the tannery owner.

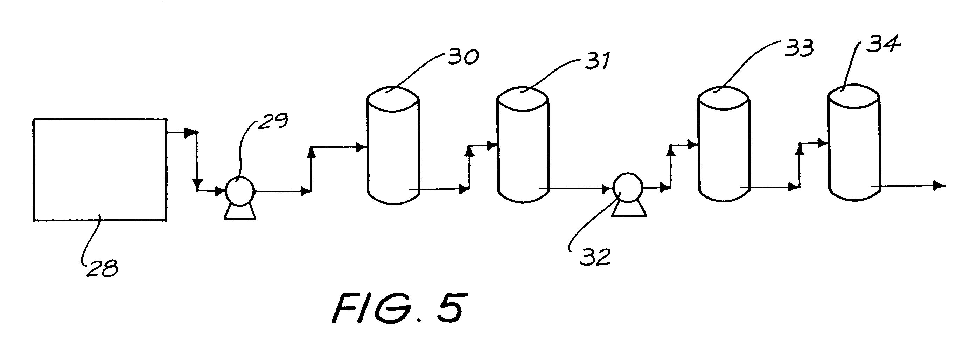

In this example the process system used to treat the effluent can be identified from the process flow sheet as shown in Fig. 5, in which item 28 is a raw effluent tank; item 29 is a pump; item 30 is a filter module containing a septum which is coated with a known High Carbon Filter Powder.

Item 31 is a filter module containing a specially coated pleated textile membrane cartridge; item 32 is a pump; item 33 is a filter module which is fitted with a single cartridge containing the blend of materials in accordance with this invention.

Item 34 is a filter module which is fitted with a single cartridge containing the blend of materials in accordance with this invention.

Set out below are tabulated results of tests on treated and untreated tannery sample.

| | | |
|---|---|---|
| Date Received | 22.01.90 | 22.01.90 |
| Sample Identification | Raw | Treated |
| Sample Origin | Tannery | Tannery |
| Total Suspended Solids mg/L | 470 | 10 |
| Total Chromium, Cr, mg/L | 4.8 | 0.1 |
| Sulphide, S. mg/L | 1.45 | 0.02 |
| Oil & Grease, mg/L | 110 | 5 |
| Biochemical oxygen demand, BOD₅, mg/L | 660 | 290 |
| Chemical oxygen demand, O₂, mg/L | 1750 | 510 |

### EXAMPLE 4

This example relates to a treatment process which was set up to remove colour, B.O.D., and C.O.D. from samples of cotton linter filtrate from a large paper mill.

The laboratory analyses show that the dark brown colour of the filtrate, (a light transmittance of 33%), was transformed to water white, (a light transmittance of 96.5%). The BOD was reduced from 179 mg per litre to 66 mg per litre, and the COD from 989 mg per litre to 356 mg per litre.

The quality of the treated water was of an acceptable standard to be diluted with other liquid generated from the mill, and finally discharged to an adjacent river.

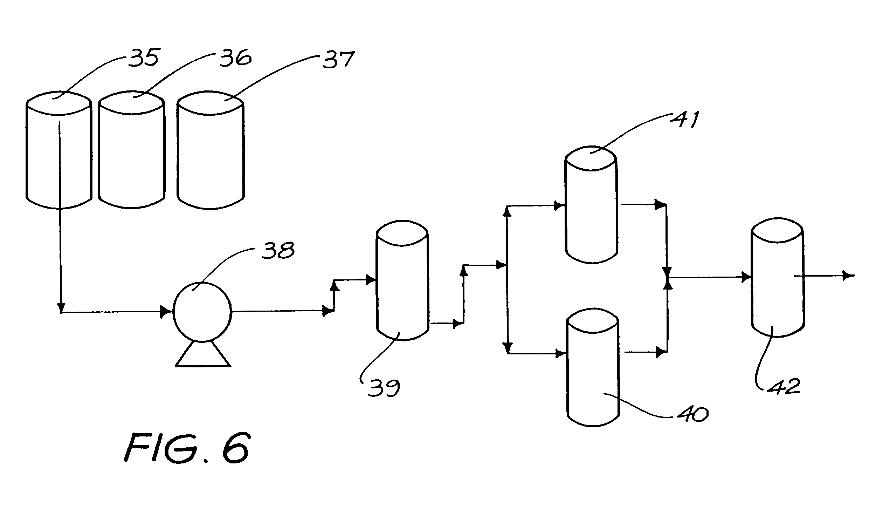

Referring to Figure 6, items 35, 36 and 37 are 200 litre drums containing representative samples of the cotton linter filtrate; item 38 is a pump; item 39 is a filter module in which a septum is coated with a known High Carbon Filter Powder.

Items 40 and 41 are filter modules operating in parallel, each of which is fitted with two cartridges containing the blend of materials in accordance with this invention.

Item 42 is a filter module which is fitted with two cartridges containing the blend of materials in accordance with this invention.

Set out below are tabulated results of tests carried out on treated and untreated samples.

| | B.O.D. | C.O.D. | Colour (% Transmittance) |
|---|---|---|---|
| Raw Filtrate | 179 mg/L | 989 mg/L | 33.0% |
| Treated Water | 66 mg/L | 356 mg/L | 96.5% |

## Claims

1. A system for the treatment and retreatment of contaminated fluid waste comprising:
a source of contaminated waste linked to a circulation network of pipes,
means in the network for urging the contaminated fluid waste from the source through the network,
characterised in that the network comprises at least one receptacle containing a filter blend comprising 5% to 35% carbonaceous powder, 20% to 60% of a first adsorptive fibre material and 20% to 60% of a second adsorptive fibre material, the blend having a greater amount of the first fibre material and second fibre material combined compared to the amount of the carbonaceous powder to form a cartridge which is permeable to the fluid.

2. A system according to claim 1 wherein said cartridges are disposed in the network in series, in parallel, or in series and in parallel between the source and the outlet of the network.

3. A system according to claim 2 further comprising pretreatment filters upstream of the cartridges.

4. A system according to claim 1, 2 or 3 wherein the blend has a permeability which allows the passage of the waste through the cartridge at a velocity within the range 0.01 cm/sec to 1.0 cm/sec.

5. A system according to any preceding claim wherein the filtration of the waste is effected by attraction of the waste onto the surfaces of the particulate constituents of the blend.

6. A filter blend for use in treatment of contaminated fluid waste comprising 5% to 35% carbonaceous powder, 20% to 60% of a first adsorptive fibre material and 20% to 60% of a second adsorptive fibre material, the blend having a greater amount of the first fibre material and second fibre material combined compared to the amount of the carbonaceous powder.

7. A filter blend according to claim 6 wherein the first and second fibre materials comprise spiky skeletal fibres.

8. A housing including a filter blend according to claim 7.

9. A housing according to claim 8 wherein the blend is contained in at least one filtration element cavity in the housing and which is concentric about an inner core.

10. A housing according to claim 9 wherein the velocity of liquid passing through the inner core falls within the range of 0.01 cm/sec to 1.0 cm/sec.

11. A housing according to claim 10 wherein the filtration element is sandwiched between two permeable filaments.

12. A housing according to claim 11 wherein the filtration element comprises a series of modular panels having the blend therein and sandwiched between permeable filaments.

## Patentansprüche

1. System zur Behandlung und Wiederbehandlung von kontaminiertem fluiden Abfall aufweisend:
eine Quelle kontaminierten Abfalls, die mit einem kreislaufartigen Rohrnetz verbunden ist,
eine Einrichtung im Netzwerk, die den kontaminierten fluiden Abfall von der Quelle durch das Netz drückt,
dadurch gekennzeichnet, daß das Netz zumindest ein Behältnis umfaßt, das eine Filtermischung enthält, die 5% bis 35% kohlenstoffhaltigen Pulvers, 20% bis 60% eines ersten adsorptiven Fasermaterials und 20% bis 60% eines zweiten adsorptiven Fasermaterials umfaßt, wobei die Mischung eine größere Menge an erstem Fasermaterial und zweitem Fasermaterial in Kombination im Vergleich zur Menge des kohlenstoffhaltigen Pulvers umfaßt, um eine Patrone auszubilden, die für das Fluid permeabel ist.

2. System nach Anspruch 1, in welchem die Patronen in dem Netz in Serie, parallel oder in Serie und parallel zwischen der Quelle und dem Auslaß des Netzes angeordnet sind.

3. System nach Anspruch 2, ferner aufweisend Vorbehandlungsfilter auf der stromabwärtigen Seite der Patronen.

4. System nach Anspruch 1, 2 oder 3, in welchem die Mischung eine Permeabilität aufweist, die den Durchsatz des Abfalls durch die Patrone mit einer Geschwindigkeit innerhalb des Bereichs 0,01 cm/s bis 1,0 cm/s ermöglicht.

5. System nach einem vorhergehenden Anspruch, in welchem die Filtration des Abfalls durch Anziehung des Abfalls auf die Oberflächen partikelartiger Bestandteile der Mischung bewirkt wird.

6. Filtermischung zur Verwendung bei der Behandlung kontaminierten fluiden Abfalls, aufweisend 5% bis 35% eines kohlenstoffhaltigen Pulvers, 20% bis 60% eines ersten adsorptiven Fasermaterials und 20% bis 60% eines zweiten adsorptiven Fasermaterials, wobei die Mischung eine größere Menge des ersten Fasermaterials und des zweiten Fasermaterials in Kombination im Vergleich zur Menge des kohlenstoffhaltigen Pulvers umfaßt.

7. Filtermischung nach Anspruch 6, in welcher das erste und zweite Fasermaterial stengelige Skelettfasern umfassen.

8. Gehäuse, aufweisend eine Filtermischung nach Anspruch 7.

9. Gehäuse nach Anspruch 8, in welchem die Mischung in zumindest einem Filtrationselementhohlraum im Gehäuse enthalten ist, welcher zudem konzentrisch um einen inneren Kern ist.

10. Gehäuse nach Anspruch 9, in welchem die Geschwindigkeit einer durch den inneren Kern tretenden Flüssigkeit in den Bereich von 0,01 cm/s bis 1,0 cm/s fällt.

11. Gehäuse nach Anspruch 10, in welchem das Filtrationselement sandwichartig zwischen zwei permeablen Filamenten angeordnet ist.

12. Gehäuse nach Anspruch 11, in welchem das Filtrationselement eine Serie modularer Paneele umfaßt, die die Mischung in sich und sandwichartig zwischen permeablen Filamenten enthalten.

## Revendications

1. Système pour le traitement et le retraitement d'un rejet de fluide contaminé, comprenant :
une source de rejet contaminé reliée à un réseau de conduits de circulation ;
un moyen dans le réseau pour entrainer le rejet de fluide contamine depuis la source au travers du réseau,
caractérisé en ce que le réseau comprend au moins un réceptacle contenant un mélange de filtrage comprenant de 5 % à 35 % de poudre carbonée, de 20 % à 60 % d'un premier matériau de fibre adsorbant et de 20 à 60 % d'un second matériau de fibre adsorbant, le mélange comportant une plus grande quantité du premier matériau de fibre et du second matériau de fibre combinés par comparaison avec la quantité de la poudre carbonée afin de former une cartouche qui est perméable au fluide.

2. Système selon la revendication 1, dans lequel lesdites cartouches sont disposées dans le réseau en série, en parallèle, ou en série et en parallèle entre la source et la sortie du réseau.

3. Système selon la revendication 2, comprenant en outre des filtres de prétraitement en amont des cartouches.

4. Système selon la revendication 1, 2 ou 3, dans lequel le mélange présente une perméabilité qui permet le passage du rejet au travers de la cartouche à une vitesse dans la plage de 0,01 cm/s à 1,0 cm/s.

5. Système selon l'une quelconque des revendications précédentes, dans lequel le filtrage du rejet est réalisé au moyen de l'attraction du rejet sur les surfaces des constituants particulaires du mélange.

6. Mélange de filtrage pour une utilisation lors du traitement d'un rejet de fluide contaminé comprenant de 5 % à 35 % de poudre carbonée, de 20 % à 60 % d'un premier matériau de fibre adsorbant et de 20 % à 60 % d'un second matériau de fibre adsorbant, le mélange comportant une plus grande quantité du premier matériau de fibre et du second matériau de fibre combinés par comparaison avec la quantité de la poudre carbonée.

7. Mélange de filtrage selon la revendication 6, dans lequel les premier et second matériaux de fibre comprennent des fibres à squelettes colonnaires.

8. Boîtier incluant un mélange de filtrage selon la revendication 7.

9. Boîtier selon la revendication 8, dans lequel le mélange est contenu dans au moins une cavité d'élément de filtrage dans le boîtier, laquelle est concentrique par rapport à un noyau interne.

10. Boîtier selon la revendication 9, dans lequel la vitesse d'un liquide traversant le noyau interne tombe dans la plage de 0,01 cm/s à 1,0 cm/s.

11. Boîtier selon la revendication 10, dans lequel l'élément de filtrage est pris en sandwich entre deux filaments perméables.

12. Boîtier selon la revendication 11, dans lequel l'élément de filtrage comprend une série de panneaux modulaires comportant le mélange dedans et pris en sandwich entre des filaments perméables.
